# EUROPÄISCHE PATENTSCHRIFT

(11) **EP 3 439 245 B1**
(45) Veröffentlichungstag und Bekanntmachung des Hinweises auf die Patenterteilung: **30.12.2020**
(21) Anmeldenummer: 18183872.3
(22) Anmeldetag: 17.07.2018
(51) Int. Cl.: H04L 12/403, H04L 29/08

(54) **DATENÜBERTRAGUNGSVERFAHREN ZWISCHEN EINEM DREHWINKELGEBER UND EINER MOTORSTEUEREINRICHTUNG ODER EINER AUSWERTEEINHEIT**
METHODS FOR DATA COMMUNICATION BETWEEN AN ANGULAR POSITIONING SENSOR AND AN ENGINE CONTROL UNIT OR PROCESSING UNIT
PROCÉDÉS DE COMMUNICATION DE DONNÉES ENTRE UN CAPTEUR DE POSITION ANGULAIRE ET UNE UNITÉ DE CONTRÔL D'UN MOTEUR OU DE TRAITEMENT

(30) Priorität: 31.07.2017 DE 102017117288
(43) Veröffentlichungstag der Anmeldung: 06.02.2019
(73) Patentinhaber: Hengstler GmbH, 78554 Aldingen (DE)
(72) Erfinder: BÜCHER, Johann, 78554 Aldingen (DE); LINDEN, Martin, 78166 Donaueschingen (DE); KLAIBER, Wolfgang, 78595 Hausen (DE)
(74) Vertreter: Riebling, Peter

(56) Entgegenhaltungen:
- EP-A1- 0 980 166
- EP-B1- 2 148 178
- WO-A1-02/49232
- DE-A1-102010 052 537

## Beschreibung

Die Erfindung betrifft ein Datenübertragungsverfahren zwischen einem Drehwinkelgeber und einer Motorsteuereinrichtung oder einer Auswerteeinheit nach dem Oberbegriff des Patentanspruches 1.

Ein solches Datenübertragungsverfahren ist beispielsweise mit dem Gegenstand der EP 2 148 178 B1 bekannt geworden.

Das bekannte Verfahren bezieht sich auf eine Steuereinheit, die mit einem Positionsmesssystem kommuniziert und eine Übertragung von Daten-Frames in einer vorgegebenen Bit-Länge vorsieht, wobei in jedem Frame wenigstens eine erste Bit-Länge die Sendung von Daten von der Steuereinheit zu dem Positionsmesssystem und wenigstens eine zweite Bit-Länge für die Sendung von Daten von dem Positionsmesssystem zu der Steuereinheit vorgesehen ist.

Im übertragenen Frame ist ferner ein Zeitschlitz vorgesehen, in welchem Daten weder von der Steuereinheit an das Positionsmesssystem noch von dem Positionsmesssystem zur Steuereinheit übertragen werden und in welchem ein Triggerimpuls von der Steuereinheit an das Positionsmesssystem übertragen wird, welcher eine Positionsdatenaufnahme im Positionsmesssystem triggert.

Das genannte Schutzrecht beschäftigt sich mit einem Taktsignal zur Synchronisierung der Steuereinheit und des Messsystems innerhalb der ersten Bit-Länge von Steuereinheit zum Positionsmesssystem, verwendet aber grundsätzlich auf der Steuer- und Auswerteseite lediglich einen einzigen Master, der mit einem zugeordneten Slave auf der Seite des Drehwinkelgebers kommuniziert.

In den dortigen Figuren 6 und 7 ist ein Blockschaltbild dargestellt, in dem der Master als "Processing Unit Interface" und das dazugehörende Positionsmesssystem als "Position Encoder Interface" bezeichnet ist.

Der Master ist mit dem angeschlossenen Positionsmesssystem über insgesamt vier Leitungen verbunden, nämlich zwei Steuerleitungen und zwei Stromversorgungsleitungen.

In einem weiteren Ausführungsbeispiel nach Figur 7 sind die Daten auf die Versorgungsspannungsleitung aufmoduliert, so dass ein Zweidraht-Bussystem zwischen dem Master und dem Positionsmesssystem verwirklicht ist.

Nachteil des bekannten Verfahrens ist allerdings, dass lediglich ein Master und ein Slave für die bidirektionale Datenübertragung zwischen der Steuereinheit und einem Positionsmesssystem vorhanden sind, was mit verschiedenen Nachteilen verbunden ist.

Ein erster Nachteil ist, dass keine zusätzlichen Sensoren angeschlossen werden können, die zusätzlich adressiert werden können und weiterer Nachteil ist, dass auch keine zusätzlichen Mastersteuereinheiten verwendet werden können, die zusätzliche Aufgaben neben dem primären Master übernehmen könnten.

Insgesamt haftet dem bekannten Verfahren, welches von einer Zweidraht-Übertragungsleitung und einer Steuereinheit und einem angeschlossenen primären Slave ausgeht, der Nachteil an, dass übergeordnete Masteraufgaben und der Anschluss von mehreren Slaves nicht vorgesehen sind.

Die WO 02/49232 A1 offenbart ein Verfahren zur digitalen, bidirektionalen Datenübertragung auf einer Mehrzahl von Übertragungskanälen in Form von Frames einer vorgegebenen Bitlänge in zeitlich hintereinander folgenden Zeitschlitzen, wobei ein primärer Master in Form eines übergeordneten Sende-/Empfangsgeräts gemeinsam mit einem Slave einen der vorhandenen Übertragungskanäle bestimmt, den beide zum Senden und/oder Empfangen verwenden. Die Zuteilung des Übertragungskanals erfolgt dynamisch, wobei zur Steuerung der Zuteilung ein Frameheader verwendet wird.

DE 10 2010 052 537 A1 offenbart eine Vorrichtung zur Konfigurierung von Busteilnehmern über eine Anschlusstechnik anhand einer konfigurierbaren Busadresse, wobei die Konfiguration jedes Busteilnehmers in der Anschlusstechnik angeordnet ist.

Die EP 0 980 166 A1 offenbart ein Kommunikationsverfahren zwischen mehreren Kommunikationsteilnehmern über ein Bussystem.

Der Erfindung liegt ausgehend von der EP 2 148 178 B1 die Aufgabe zugrunde, ein Verfahren zur digitalen bidirektionalen Datenübertragung zwischen einer Steuereinheit und einem Positionsmesssystem so weiterzubilden, dass eine Vielzahl von weiteren Slaves angeschlossen werden können und eine Vielzahl von weiteren Sensoren, die alle vom Master adressierbar sind.

Zur Lösung der gestellten Aufgabe ist die Erfindung durch die technische Lehre des Anspruches 1 gekennzeichnet.

Ein Merkmal der Erfindung ist, dass ausgehend von einem primären Master, der über eine Zweidraht-Busleitung mit einer Motoreinheit kommuniziert, nun erfindungsgemäß vorgesehen ist, dass am primären Master noch weitere Sub-Master an die gleiche Busleitung anschließbar sind und dass ferner im Bereich der Motoreinheit an den dort angeordneten primären Slave weitere Subslaves ankoppelbar sind, die ebenfalls über Busanschlüsse auf die gleiche Busleitung kommunizieren, die der primäre Master mit dem primären Slave nutzt.

Mit der gegebenen technischen Lehre ergibt sich der Vorteil einer Erweiterung eines bekannten Datenübertragungsverfahrens, denn es ist nun erstmals möglich, auf der Seite der Steuereinheit dem primären Master ein oder mehrere Sub-Master zuzuordnen.

Damit wird der Anwendungsbereich eines solchen Datenübertragungsverfahrens erweitert, denn die parallel zum primären Master angeschlossenen ein oder mehrere Submaster können nun vom primären Master unabhängige Aufgaben übernehmen, was bisher nicht bekannt war. Der primäre Master kann deshalb einen schnellen Datenverkehr über den Steuerbus verwirklichen und weitere Aufgaben, die üblicherweise einem primären Master zugewiesen werden, sind ausgelagert und einem parallel zum primären Master angeschlossenen (ein oder mehreren) Submastern zugeordnet.

Merkmal der Erfindung ist, dass ein primärer Master über eine Zweidraht-Busleitung mit dem Positionsmesssystem und/oder der Motoreinheit und/oder der Auswerteeinheit mit einem dort angeordneten primären Slave kommuniziert, und dass an den primären Slave weitere Sub-Slaves parallel ankoppelbar sind, die auf die gleiche Busleitung kommunizieren, die der primäre Master mit dem primären Slave nutzt.

In einem ersten Ausführungsbeispiel ist es vorgesehen, dass ein erster Sub-Master parallel zum primären Master auf der Seite der Steuereinheit geschaltet ist und dass der Sub-Master nunmehr direkt mit einer internet- oder geräte-basierten Daten-Cloud kommunizieren kann und die vom primären Master erzeugten Daten in die Cloud einspeisen kann. Ferner kann der Sub-Master weitere Aufgaben übernehmen, wie z. B. Diagnostik-Aufgaben oder die Bereitstellung eines Gateways, mit dem der Sub-Master die Daten vom primären Master in das Internet einspeist, oder in ein LAN oder ein WLAN oder in ein mobiles Datensystem.

Dabei ist in einer Weiterbildung vorgesehen, dass von der Cloud ausgehend weitere periphere Geräte angesteuert werden können, wie z. B. Terminals zur Datendarstellung der erzeugten und/oder verarbeiteten Daten.

Somit ist in einer ersten bevorzugten Ausführungsform vorgesehen, dass dem primären Master weitere sekundäre Master parallel geschaltet werden können, weiche zusätzliche Aufgaben auf der Seite der Steuereinheit übernehmen.

Somit ist es nunmehr nach dem Gegenstand des Anspruches 1 vorgesehen, dass auch auf der Seite der Motoreinheit, an der nach dem Stand der Technik, lediglich ein einziger Slave in der Form eines Positionsmesssystems angeordnet war, nunmehr weitere Sub-Slaves dem erstgenannten primären Slave parallel geschaltet sind.

Hier erfolgt eine wesentliche Erweiterung des Aufgabenbereichs der Motoreinheit, denn dem als Encoder ausgebildeten primären Slave können nun weitere Sub-Slaves parallelgeschaltet werden, die über geeignete Busableitungen auf den zentralen Steuerbus arbeiten.

Von Vorteil ist, dass z. B. ein erster sekundärer Slave das Interface für verschiedene Sensoreingänge zur Verfügung stellt, die alle in der Motoreinheit angeordnet sind. Es kann auch ein zweiter sekundärer Slave vorhanden sein, der ein Interface für Maschinendaten oder außerhalb des Motors angeordnete Daten, wie z. B. Temperatur, Feuchtigkeit, Vibration und dergleichen bereitstellt.

Wichtig ist, dass sämtliche Slaves, d. h. der primäre Slave und die möglicherweise parallel dazu angeschlossenen sekundären Slaves selbst nun wiederum über Sensoreingänge und Aktuatorausgänge verfügen, d. h. es kann direkt über jeden Slave ein Eingang für einen dort angeordneten Sensor vorgesehen werden, und der Slave kann selbst auch einen angeschlossenen Aktuator ansteuern.

Eine solche Ansteuerung eines Aktuators ist z. B. eine Motorbremse, die Ansteuerung eines Kontrolllichtes und andere Geräte.

Wichtig bei der Ausbildung der Motoreinheit ist, dass die parallel geschalteten Slaves auch untereinander eine Datenkommunikation ausführen, d. h. sie benötigen keinen Datenverkehr und keine Ansteuerung mit dem primären Master über die primäre Busleitung, sondern sie können über den Abzweigbus, der von der primären Busleitung abzweigt, untereinander kommunizieren und Daten austauschen.

Für die Kommunikation der Slaves untereinander muss der primäre Datenverkehr (MRF zu DTF1) nicht eingeschränkt werden. Die Kommunikation der Slaves untereinander wird im DTF2 durchgeführt, ohne die primäre Kommunikation zu belasten.

Nach dem Gegenstand der Erfindung ist es nun erstmals möglich, eine Datenübertragungsrate im gesamten Bus-System von z.B. 10 MBaud oder mehr zu erreichen, um eine zyklische Kommunikation bereitzustellen, wobei nach einem weiteren Verfahrensmerkmal der Erfindung vorgesehen ist, dass insgesamt drei Zeitschlitze für die sich ständig wiederholende Datenübertragung vorhanden sind.

In einem ersten Zeitschlitz hat der primäre Master das Wort, d. h. über den MRF (Master Request Frame) erzeugt der Master ein Kommando, welches über die zentrale Busleitung über die Zweidrahtleitung angeschlossene Slaves mitgeteilt wird.

Dies erfolgt in einem relativ kurzen Zeitschlitz, und nach Beendigung des übertragenen primären Masterkommandos erfolgt zu einem bestimmten Zeitpunkt der Start eines zweiten Zeitschlitzes, in dem die angesteuerten Slaves mit einem bestimmten Datenpaket antworten.

Dieses Datenpaket kann z. B. die Positionsdaten des Encodersystems im primären Slave sein, mit dem CRC-Daten und Livecounter-Daten übertragen werden.

Dem primären Slave wird also ein eigener (-der zweite-) Zeitschlitz zugeordnet, und wichtig ist, dass ein dritter Zeitschlitz vorhanden ist, in den wahlweise der primäre Slave einen Datenaustausch über die zentrale Busleitung mit den Mastersteuereinheiten vornehmen kann, aber auch dass in diesem dritten Zeitschlitz die Sub-Slaves mit der Mastersteuereinheit eine Datenkommunikation ausführen können.

Damit ist eine strenge Trennung zwischen der Datenübertragung des primären Slaves im zweiten Zeitschlitz und einer Datenübertragung im dritten Zeitschlitz gegeben, in dessen Bereich der primäre Slave zwar auch noch Daten übertragen kann, wobei der dritte Zeitschlitz vornehmlich für eine weitere Datenübertragung der Sub-Slaves untereinander, für eine Datenübertragung an den primären Slave und eine Datenübertragung an die Mastersteuereinheit vorgesehen ist.

Gesteuert wird die Datenkommunikation über das jeweilige Masterkommandowort, welches je nach Fall unterschiedlich sein kann, und entsprechend werden dann der primäre Slave oder die parallel daran angeschalteten Sub-Slaves angesteuert und antworten auf das entsprechende Anforderungskommando.

Erfindungsgemäß kommunizieren die Sub-Slaves mit dem primären Slave auf der Seite der Motoreinheit untereinander wobei ein solcher Austausch im dritten Zeitschlitz stattfindet, und dies wird gesteuert durch ein Masterkommando MSRD-Send Request Data with Multicast replay-Data exchange broadcast (Slave-Verkehr).

Hieraus wird deutlich, dass der dritte Zeitschlitz für untergeordnete Datenaustauschaufgaben genutzt wird, wenn der zweite Zeitschlitz ausschließlich dem primären Slave zur Verfügung steht, der in diesem Datenrahmen besonders zeitkritische Positionsdaten überträgt.

Der primäre Master kann über eine Scan-Liste verfügen, die er selbst ermittelt oder konfiguriert bekommt, um dann die Teilnehmer, die über die zentrale Zweidraht-Busleitung angeschlossen sind, immer wieder anzurufen oder direkt abzufragen.

In der Scan-Liste werden die Adressen, die ID und die Seite von Startadresse bis Endadresse konfiguriert und diese Daten können auch mehrfach vorhanden sein. Diese Kommunikation wird in dem MRF-Timeslot 1 ausgesandt, wobei dann der Sub-Teilnehmer mit der entsprechenden ID im Sub-Slot 3 entsprechende Schreibe- und Leserechte bekommt, um Daten von einem Teilnehmer zu einem anderen zu senden.

Die Datenübertragung nach dem Stand der Technik gemäß der EP 2 148 178 B1 war deutlich begrenzt, weil die Teilnehmer nur in bestimmten Fenstern (Frames) untereinander kommunizieren konnten, so dass die Positionsdaten, die zeitkritisch sind, unterbrochen gesendet werden mussten, um die erforderliche Menge der Positionsdaten zu übertragen.

Daraus ergibt sich, dass die Positionsdaten in verschiedenen Frames übertragen wurden, was mit Schwierigkeiten auf der Auswerteeinheit verbunden ist, weil die Auswerteeinheit die verschiedenen Frames wieder zusammensetzen muss. Aus diesem Grund war die aufwendige Erzeugung von Synchronisierungssignalen erforderlich.

Damit ergibt sich das Problem, dass kein Zeitrahmen mehr vorhanden ist, um zusätzliche Daten zu übertragen.

Hier setzt die Erfindung ein, die neben dem Zeitschlitz 1, in dem die zeitkritischen Daten übertragen werden, einen zweiten Zeitschlitz definiert, in dem entweder - je nach dem MRF-Kommando - die Daten des zweiten Zeitschlitzes kopiert werden oder eine andere Datengeneration stattfindet.

Bei der vorliegenden Erfindung besteht auch der Vorteil, dass die zentrale Busleitung und auch die an die Busleitung angeschlossenen Slaves und Sub-Slaves insgesamt eine Verbindungslänge von mehr als 100 m haben können, was bisher nur bei verschiedenen Zweidraht-Bussystemen, wie z. B. dem AS-Steuerbus und anderen bekannt war, die jedoch nur eine sehr langsame Datenübertragung erreichen.

Die Erfindung vermeidet demnach eine gestückelte Übertragung von zusammengehörenden Datenpaketen, sondern sieht vor, dass die Datenpakete insgesamt in zeitlich voneinander getrennten Zeitschlitzen übertragen werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Blockschaltbild einer ersten Ausführungsform eines Datenübertragungsverfahrens nach der Erfindung
- Figur 2:: ein gegenüber Figur 1 abgewandeltes und mit anderen Modulen dargestelltes Blockschaltbild
- Figur 3:: das Zeit-Kommando-Diagramm der Datenübertragung über die zentrale Busleitung

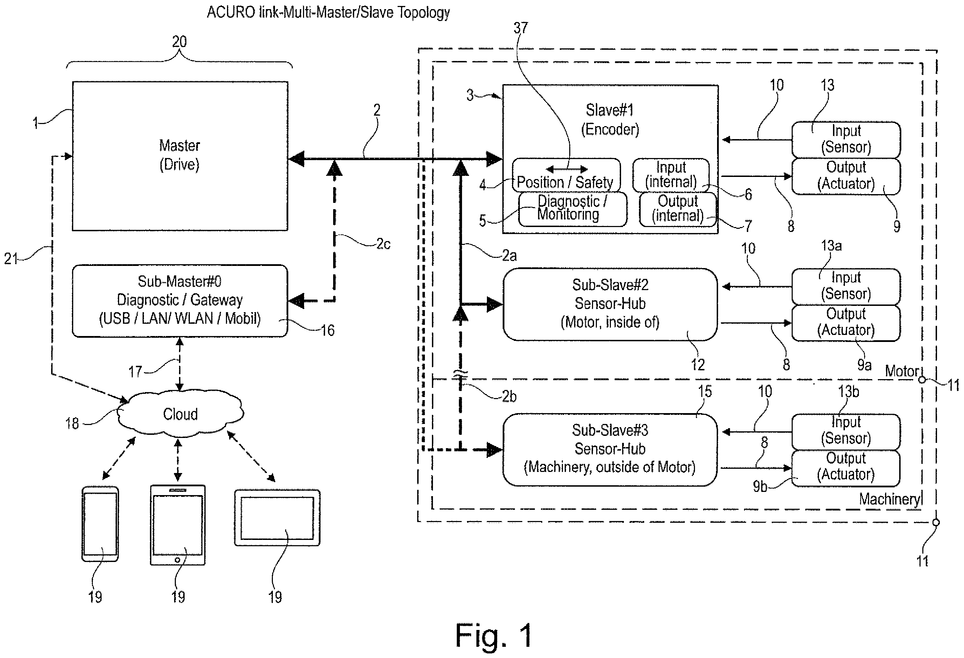

In Figur 1 ist allgemein eine Steuereinheit 20 dargestellt, in der ein primärer Master 1 angeordnet ist.

Die Steuereinheit 20 ist entfernt von einem Motorgehäuse angeordnet, welches im gezeigten Ausführungsbeispiel aus einem Motor-Innenraum 11 und einer Motor-Umgebung 14 besteht.

Wichtig ist, dass die Verbindung zwischen der Steuereinheit 20 und den Modulen 11, 14 durch eine Busleitung 2 verwirklicht wird, die als Zweidraht-Busleitung ausgebildet ist und über die auch die Stromversorgung für alle in den Teilen 11, 14 angeordneten Slaves, Sensoren und anderen Module vorgesehen ist.

Erfindungsgemäß ist nunmehr vorgesehen, dass dem primären Master 1 ein sekundärer Master 16 zugeschaltet ist, der auch als Sub-Master bezeichnet wird und der über eine Busleitung 2c direkt mit der Busleitung 2 des primären Masters 1 kommuniziert.

Dieser Sub-Master 16 führt vom Master 1 getrennte Verwaltungsaufgaben aus und stellt z. B. eine USB-Schnittstelle, ein LAN, ein WLAN oder eine mobile Interface-Anbindung zur Verfügung und ist deshalb in der Lage, über die Anbindung 17 direkt in eine Cloud 18 zu kommunizieren.

Deshalb kann der primäre Master 1 direkt über die Anbindung 21 auch seine Daten in die Cloud 18 hochladen, genauso wie dies der Submaster 16 über die Anbindung 17 ausführen kann.

An die Cloud 18 können entsprechende Anbindungen vorhanden sein, über welche Terminals 19 angesteuert werden, welche die Daten, die auf der Steuereinheit 20 erzeugt werden, auswerten, aufbereiten oder optisch darstellen.

In umgekehrter Weise ist es auch möglich, dass von der Seite der Terminals 19 eine Steuersoftware zur Verfügung gestellt wird, und die Terminals 19 über Anbindungen in die Cloud 18 mit der Cloud verbunden sind. Diese ist über die Anbindungen 17, 21 zu einer direkten Daten- und Befehlsübertragung auf den primären Master 1 und den parallel angeschlossenen Sub-Master 16 geeignet.

Vorteilhaft ist, dass über die zentrale Busleitung 2, die bevorzugt aus einer Zweidraht-Busleitung besteht, nunmehr die gesamte Motorseite 11, 14 angesteuert werden kann.

Die Motorseite besteht aus der Motorumgebung 14, die auch außerhalb des Motorgehäuses angeordnet sein kann und aus den im Motor-Innenraum 11 angeordneten Modulen. In der Motorumgebung sind bevorzugt Sensoren undloder Aktoren angeordnet.

Im Ausführungsbeispiel nach Figur 1 ist dargestellt, dass in an sich bekannter Weise im Innenraum des Motors 11 nunmehr ein primärer Slave 3 angeordnet ist, in dem ein Drehwinkel-Encoder implementiert ist.

In diesem primären Slave 3 sind auch alle anderen zur Datenaufbereitung und Datenübertragung notwendigen Module angeordnet, wie z. B. ein Positionsmodul 4, welches gegebenenfalls über einen redundanten Kanal 37 verfügen kann und ein dazugehörendes Zustandsmodul 5 und weitere Module, die z. B. als Eingangs- oder Ausgangsmodule 6, 7 ausgebildet sein können.

Daraus ergibt sich, dass der primäre Slave 3 über einen Signalpfad 8 einen Aktuator oder mehrere Aktuatoren 9 ansteuern kann und umgekehrt können ein oder mehrere Sensoreingänge von Sensoren 13 vorhanden sein, die einen Datenaustausch über den Signalpfad 10 mit dem primären Slave 3 ausführen.

Erfindungsgemäß ist nun vorgesehen, dass dem primären Slave 3 nunmehr weitere Sub-Slaves zugeordnet sind, die alle parallel geschaltet sind und über entsprechende Abzweigungen von der zentralen Busleitung 2 mit dem primären Slave 3 kommunizieren können, aber auch direkt mit dem primären Master 1.

So ist im Ausführungsbeispiel nach Figur 1 dargestellt, dass im Motorinnenraum 11 noch ein Sub-Slave 12 angeordnet sein kann, der z. B. weitere Daten, die im Motorinnenraum entstehen, verarbeitet und weiterleitet. Derartige Daten können z. B. die Motortemperatur, die Feuchtigkeit, Vibration und dergleichen sein. Auch dieser Sub-Slave verfügt über den Signalpfad 8 zu anzusteuernden Aktuatoren 9a und über Sensoren 13a, die über den Signalpfad 10 in den Sub-Slave 2 Daten übertragen.

Als weiteres Ausführungsbeispiel zeigt die Figur 1, dass dem Sub-Slave 2 noch ein weiterer Sub-Slave 15 parallel geschaltet werden kann, der sich dann bevorzugt außerhalb des Motoreninnenraums 11 befindet, nämlich z. B. in der Umgebung des Motors.

Es kann sich hierbei um Maschinendaten handeln, die außerhalb des Motors vom Sub-Slave 15 erhoben werden, wie z. B. Temperatur, Feuchte, Vibration und andere Daten, die direkt aus der Maschine abgeleitet werden, in welche der Motor eingebaut ist.

Auch hier ist erfindungsgemäß vorgesehen, dass vom Signalpfad 8 Aktuatoren 9b angesteuert werden und umgekehrt eine Mehrzahl von Sensoren 13b über den Signalpfad 10 in den Sub-Slave 15 Daten einspeisen.

Die Unterteilung des Übertragungsprotokolls in insgesamt drei Zeitschlitze stellt sicher, dass nicht nur zwei Sub-Slaves 12, 15 parallel geschaltet werden können, sondern eine Vielzahl weiterer Sub-Slaves, die der Vollständigkeit halber nicht dargestellt sind.

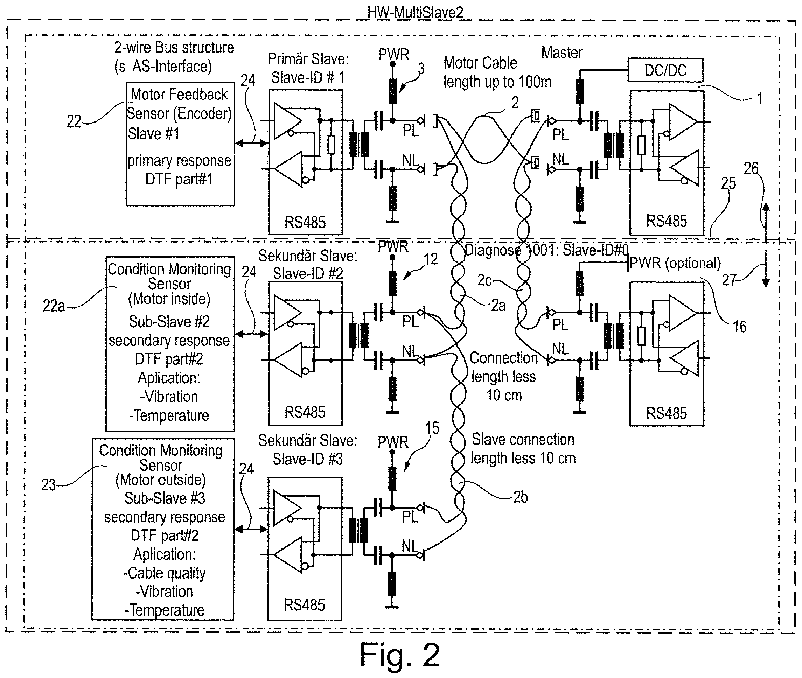

Die Figur 2 zeigt im Vergleich zur Figur 1 einen etwa gleichen Aufbau, wo erkennbar ist, dass auf der rechten Seite der primäre Master 1 und ein hierzu parallel geschalteter Sub-Master 16 vorhanden sind und die genannten Master über eine von der zentralen Zweidraht-Busleitung 2 abzweigende Busleitung 2c miteinander verbunden sind.

In vereinfachter Darstellung ist in Figur 2 lediglich das Interface des jeweiligen Masters 1, 16 dargestellt und weitere Anpassschaltungen, ohne dass auf die Einzelheiten der elektrischen Komponenten eingegangen wird.

Nach einem Merkmal der Erfindung kann es jedoch auch vorgesehen sein, dass die als Zweidraht-Busleitung 2 ausgebildete Busleitung auch als Vierdraht-Busleitung ausgebildet sein kann, wobei über zwei Drähte die Steuerkommandos und über zwei weitere Drähte die Stromversorgung stattfindet.

Dies gilt nicht nur für die Busleitung 2, sondern auch für die daran angeschlossenen Busleitungen 2a, 2b, 2c.

In einer anderen Ausgestaltung der Erfindung kann es im Übrigen vorgesehen sein, dass die zentrale Busleitung 2 als Zweidraht- oder Vierdraht-Ausführung ausgebildet ist und ebenfalls davon abweichend, die daran anschließenden Busleitungen 2a, 2b, 2c wahlweise und in jeder beliebigen Kombination untereinander ebenfalls als Zweidraht- oder Vierdraht-Busleitungen ausgebildet sind.

In lediglich schematisierter Darstellung sind im mittleren Teil der Figur 2 die Slaves 3, 12, 15 dargestellt und es ist erkennbar, dass diese ebenfalls über die Zweidraht- oder die Vierdraht-Busleitung 2a, 2b miteinander verbunden sind und auch untereinander kommunizieren können.

Am Ausgang des primären Slaves 3 ist dabei ein Sensormodul 22 angeordnet, in dem der zeitkritische Drehwinkel-Encoder angeordnet ist, wobei dieser primäre Slave im Zeitschlitz 2 (DTF 1) kommunizieren darf.

Hierzu ist eine Leitung 24 vorgesehen.

Das weitere Sensormodul 22a ist über eine weitere Leitung 24 mit dem sekundären Slave 12 verbunden und enthält beispielsweise Sensoren für die Erfassung der Vibration, der Temperatur, der Feuchte und andere physikalische Parameter und ist dazu vorgesehen, nur im Zeitschlitz 3, nämlich im DTF 2 zu kommunizieren.

Der dritte Sub-Slave 15 ist über eine weitere Leitung 24 mit einem weiteren Sensormodul 23 gekoppelt, und hier ist vorgesehen, dass das Sensormodul 23 nur im dritten Zeitschlitz DTF 2 kommuniziert. Eine solche Kommunikation bezieht sich z. B. auf die Überprüfung der Verbindungskabel, die Erfassung der Vibration, Temperatur und anderer Parameter, die im Motorinnenraum oder im Maschineninnenraum oder im Außenraum vorhanden sein können.

Im Prinzip bildet die Figur 2 auch teilweise einen Stand der Technik ab, was anhand der Trennlinie 25 erläutert wird.

Alles was oberhalb der Trennlinie 25 in Pfeilrichtung 26 liegt, ist im Prinzip eine Anordnung des Standes der Technik, und die Erfindung liegt nun darin, dass dieser Stand der Technik jenseits der Trennlinie 25 fortgesetzt wird, und zwar in Pfeilrichtung 27 nach unten, woraus ersichtlich ist, dass es nunmehr erfindungsgemäß vorgesehen ist, dass dem primären Master nun mehrere Sub-Master zugeordnet sind, und dass ebenso auf der Motorseite dem primären Slave 3 ein oder mehrere Sub-Slaves 12, 15 zugeordnet sind.

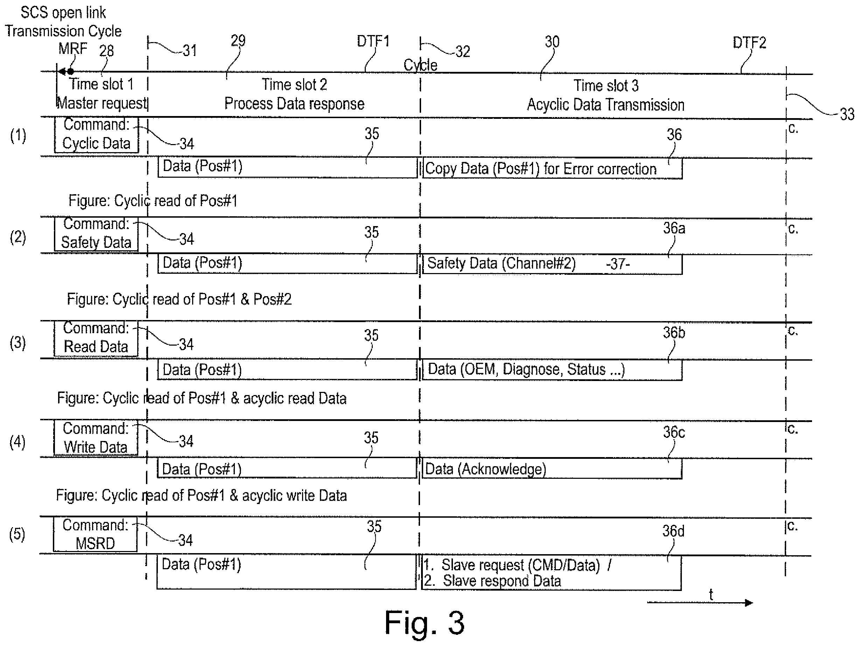

Die Figur 3 zeigt das Zeit-Befehls-Diagramm bei der Datenübertragung, ausgehend vom primären Master 1, dem gemäß Figur 3 ein Master Request Frame (MRF) im Zeitschlitz 28 (Zeitschlitz 1) zur Verfügung steht.

Es sind fünf verschiedene Arten von Kommandos untereinander in Figur 3 auf der Abszisse dargestellt, wobei im Beispiel (1) ein primäres Masterkommando 34 vom primären Master 1 erzeugt wird und über die zentrale Busleitung 2 übertragen wird.
Es handelt sich um ein Standardkommando, mit dem beispielsweise die Positionsdaten angefordert werden und im Zeitschlitz 2 (Bezugszeichen 29) - DTF1 - darf dann der primäre Slave mit einer primären Slaveantwort 35 antworten.

Der zweite Zeitschlitz 29 erstreckt sich vom Zeitpunkt 31 bis zum Zeitpunkt 32 und nach Beendigung dieses Zeitraums beginnt der dritte Zeitschlitz 30, in dem eine weitere Datenübertragung stattfindet. Die primäre Slave-Antwort 36 wird z. B. im Zeitschlitz 3 übertragen und betrifft die Daten als Kopie übersandt werden oder es findet eine Fehlerkorrektur statt.

Nach Beendigung des Zeitschlitzes 3 (DTF2) zum Zeitpunkt 33 wiederholt sich der Vorgang zyklisch und der primäre Master 1 sendet über das MRF sein Masterkommando.

Im Ausführungsbeispiel nach (2) in Figur 3 sendet der primäre Master im Zeitschlitz 1 die Anforderung zur Übermittlung von Safety-Daten, was bedeutet, dass die Positionsdaten aus einem redundanten Kanal des Drehwinkelgebers angefordert werden und der primäre Slave antwortet mit der primären Slave-Antwort 35 im Zeitschlitz 2.

Nach Beendigung der Übertragung im Zeitschlitz 2 erfolgt dann eine Übertragung von Daten im Zeitschlitz 3 (30), wobei z. B. in einem redundanten Kanal 37 Sicherheitsdaten übertragen werden und die primäre Slave-Antwort 36a erfolgt.

Im Ausführungsbeispiel nach Figur 3 gemäß (3) wird vom primären Master 1 im MRF ein Kommando "Read Data" erzeugt und es werden in der primären Slave-Antwort die angeforderten Daten im Zeitschlitz 2 übertragen.

Im Zeitschlitz 3 werden dann zusätzliche Daten übertragen, wie z. B. OEM-Daten, Diagnosedaten oder Statusdaten, wobei diese Daten vom jeweils vom Master adressierten Sub-Slave übertragen werden. Es kann dies ein primärer Slave sein, aber auch die Sub-Slaves 15.

Im Ausführungsbeispiel nach (4) in Figur 3 wird ein Schreibkommando vom primären Master im MRF erzeugt, und im Zeitschlitz 3 antwortet der adressierte Slave mit einem Bestätigungskommando.

Beim Ausführungsbeispiel nach (5) erfolgt ein sogenanntes MSRD-Kommando gesendet. Die Abkürzung bedeutet "Send Request Data with multicast replay-data exchange broadcast (Slave-Querverkehr)".

Dies bedeutet, dass bei der Erzeugung des primären Masterkommandos 34 der primäre Slave in der üblichen Weise mit seinen Positionsdaten antwortet, dass aber im zweiten Zeitschlitz (30) der Quer-Verkehr zwischen den Slaves initiiert wird, indem ein entsprechendes Befehlskommando übertragen wird und die Slaves und Sub-Slaves untereinander nun Daten austauschen können. Es kann auch vorgesehen sein, dass nach erfolgtem Datenaustausch der die untereinander ihre Daten ausgetauschten Sub-Slaves eine Rückmeldung an den primären Master übertragen wird.

Ferner kann es vorgesehen sein, dass die den Datenaustausch ausführenden Slaves nicht mit dem primären Master kommunizieren, sondern mit dem sekundären Master 16.

Im Zeitschlitz 2 (29) werden beispielsweise folgende Daten des primären Slaves übertragen:
1. Multiturn-Informationen
2. Singleturn-Informationen
3. Live-Counter
4. Prüfsumme CRC.

Im dritten Zeitschlitz (30) gemäß dem Ausführungsbeispiel (1) werden folgende Daten erzeugt:
1. Kopie der ersten Daten
2. Multiturn
3. Singleturn
4. Live-Counter
5. CRC
6. zusätzliche Statusinformationen
7. alle Daten, die alle zu einer möglichen Fehlerkorrektur dienen.

Als Zeitabstand zwischen dem Start des ersten Zeitschlitzes 28 und der Beendigung der zyklischen Datenübertragung bei Position 33 wird als typischer Wert von 31,25 Mikrosekunden angegeben.

Es werden also Datenwiederholraten von 32 KHz, 16 oder 8 KHz je nach Konfiguration erreicht.

### Zeichnungslegende

- 1: primärer Master #1
- 2: Busleitung a, b, c
- 3: Slave #1 (primary)
- 4: Positionsmodul
- 5: Zustandsmodul
- 6: Eingangsmodul
- 7: Ausgangsmodul
- 8: Signalpfad
- 9: Aktuator
- 10: Signalpfad
- 11: Motor-Innenraum
- 12: Sub-Slave #2
- 13: Sensor 13a
- 14: Motorumgebung
- 15: Sub-Slave #3
- 16: Sub-Master
- 17: Anbindung
- 18: Cloud
- 19: Terminal
- 20: Steuereinheit
- 21: Anbindung
- 22: Sensormodul 22a
- 23: Sensormodul
- 24: Leitung
- 25: Trennlinie
- 26: Pfeilrichtung
- 27: Pfeilrichtung
- 28: Zeitschlitz 1
- 29: Zeitschlitz 2
- 30: Zeitschlitz 3
- 31: Zeitpunkt
- 32: Zeitpunkt
- 33: Zeitpunkt
- 34: primäres Masterkommando
- 35: primäres Masterkommando
- 36: primäre Slave-Antwort a, b, c, d
- 37: redundanter Kanal

## Patentansprüche

1. Verfahren zur digitalen, bidirektionalen Datenübertragung zwischen einem Positionsmesssystem (3-7) und einer Motorsteuereinrichtung (1) und/oder einer Auswerteeinheit basierend auf der Übertragung von Frames (34, 35, 36) einer vorgegebenen Bitlänge in zeitlich hintereinander folgenden Zeitschlitzen (28-30), wobei ein primärer Master (1) über eine Zweidraht-Busleitung (2) mit dem Positionsmesssystem (3-7) und/oder der Motoreinheit (11, 14) und/oder der Auswerteeinheit mit einem dort angeordneten primären Slave (3) kommuniziert, wobei ein zyklisch sich wiederholender Datenrahmen aus mindestens drei zeitlich hintereinander folgenden Zeitschlitzen (28, 29, 30) vorhanden ist,
**dadurch gekennzeichnet,**
**dass** an den primären Slave (3) weitere Sub-Slaves (12, 15) parallel angekoppelt sind, die auf die gleiche Busleitung (2) kommunizieren, die der primäre Master (1) mit dem primären Slave (3) nutzt,
**dass** der primäre Master (1) im ersten Zeitschlitz (28) Daten aussendet und/oder empfängt,
**dass** im zweiten Zeitschlitz (29) ausschließlich die Datenantwort des primären Slaves (3) an den primären Master (1) in Form von zeitkritischen Positionsdaten übertragen wird, und
**dass** im dritten Zeitschlitz (30) weitere Daten (36, 36a-d) vom primären Slave (3) und/oder den daran parallel angeschlossenen Sub-Slaves (12, 15) an den primären Master (1) übertragen werden, und im dritten Zeitschlitz (30) außerdem der primäre Slave (3) und die daran angeschlossenen Sub-Slaves (12, 15) untereinander kommunizieren.

2. Verfahren nach Anspruch 1, **dadurch gekennzeichnet, dass** am primären Master (1) mindestens ein Sub-Master (16) an die gleiche Busleitung (2) angeschlossen ist

3. Verfahren nach einem der Ansprüche 1 oder 2, **dadurch gekennzeichnet, dass** die zum primären Slave (3) parallel geschalteten Sub-Slaves (12, 15) über Sensoreingänge und Aktuatorausgänge verfügen.

4. Verfahren nach einem der Ansprüche 1 bis 3, **dadurch gekennzeichnet, dass** die zum primären Slave (3) parallel geschalteten Sub-Slaves (12, 15) untereinander eine Datenkommunikation über die sie verbindende zentrale Busleitung (2, 2a, 2b) ausführen.

5. Verfahren nach einem der Ansprüche 1, 3 oder 4, **dadurch gekennzeichnet, dass** ein erster Sub-Master (16) parallel zum primären Master (1) und dass der Sub-Master (16) mit einer internet- oder geräte-basierten Cloud (18) kommuniziert und die vom primären Master (1) erzeugten Daten in die Cloud (18) einspeist.

6. Verfahren nach einem der Ansprüche 1 bis 5, **dadurch gekennzeichnet, dass** der Sub-Master (16) weitere Aufgaben, wie Diagnostik-Aufgaben oder die Bereitstellung eines Gateways, mit dem der Sub-Master (16) die Daten vom primären Master (1) in das Internet einspeist, oder in ein LAN oder ein WLAN oder in ein mobiles Datensystem zur Verfügung stellt.

## Claims

1. Method for digital, bidirectional data transmission between a position measuring system (3-7) and a motor control device (1) and/or an evaluating unit based on the transmission of frames (34, 35, 36) of predetermined bit length in chronologically sequential time slots (28-30), wherein a primary master (1) communicates via a two-wire bus line (2) with the position measuring system (3-7) and/or the motor unit (11, 14) and/or the evaluating unit with a primary slave (3) arranged there, wherein a cyclically repeating data frame comprising at least three chronologically sequential time slots (28, 29, 30) is present, **characterised in that** further sub-slaves (12, 15) are coupled in parallel to the primary slave (3), which sub-slaves (12, 15) communicate on the same bus line (2) which the primary master (1) uses with the primary slave (3), **in that** the primary master (1) in the first time slot (28) emits and/or receives data, **in that** in the second time slot (29), only the data response of the primary slave (3) is transmitted to the primary master (1) in the form of time-critical position data, and **in that** in the third time slot (30), further data (36, 36a-d) are transferred from the primary slave (3) and/or the sub-slaves (12, 15) connected in parallel thereto, to the primary master (1), and in the third time slot (30), in addition, the primary slave (3) and the sub-slaves (12, 15) connected thereto communicate with one another.

2. Method according to claim 1, **characterised in that** at least one sub-master (16) is connected to the primary master (1) on the same bus line (2).

3. Method according to one of claims 1 or 2, **characterised in that** the sub-slaves (12, 15) connected in parallel to the primary slave (3) have sensor inputs and actuator outputs.

4. Method according to one of claims 1 to 3, **characterised in that** the sub-slaves (12, 15) connected in parallel to the primary slave (3) execute data communication with one another via the central bus line (2, 2a, 2b) connecting them.

5. Method according to one of claims 1, 3 or 4, **characterised in that** a first sub-master (16) is parallel to the primary master (1) and **in that** the sub-master (16) communicates with an Internet-based or device-based cloud (18) and supplies the data generated by the primary master (1) to the cloud (18).

6. Method according to one of claims 1 to 5, **characterised in that** the sub-master (16) makes available further tasks, such as diagnostic tasks or the provision of a gateway, with which the sub-master (16) supplies the data from the primary master (1) to the Internet, or to a LAN or a WLAN or to a mobile data system.

## Revendications

1. Procédé pour la transmission de données bidirectionnelle entre un système de mesure de position (3-7) et un dispositif de commande de moteur (1) et/ou une unité d'analyse sur la base de la transmission de trames (34, 35, 36) d'une longueur de bit prédéfinie, dans des créneaux temporels (28-30) se suivant dans le temps, dans lequel un maître primaire (1) communique par une ligne de bus à deux fils (2) avec le système de mesure de position (3-7) et/ou l'unité de moteur (11, 14) et/ou l'unité d'analyse avec un esclave primaire (3) disposé à cet endroit, dans lequel une trame de données se répétant cycliquement, composée d'au moins trois créneaux temporels (28, 29, 30) se suivant dans le temps, est prévue,
**caractérisé**
**en ce qu'**à l'esclave primaire (3) sont couplés parallèlement d'autres sous-esclaves (12, 15) qui communiquent sur la même ligne de bus (2) que le maître primaire (1) utilise avec l'esclave primaire (3),
**en ce que** le maître primaire (1) émet et/ou reçoit des données dans le premier créneau temporel (28),
**en ce que** dans le deuxième créneau temporel (29), c'est exclusivement la réponse de données de l'esclave primaire (3) qui est transmise au maître primaire (1) sous forme de données de position critiques dans le temps, et
**en ce que** dans le troisième créneau temporel (30), d'autres données (36, 36a-d) sont transmises par l'esclave primaire (3) et/ou les sous-esclaves (12, 15) raccordés parallèlement à celui-ci au maître primaire (1), et dans le troisième créneau temporel (30) l'esclave primaire (3) et les sous-esclaves (12, 15) raccordés parallèlement à celui-ci communiquent en outre entre eux.

2. Procédé selon la revendication 1, **caractérisé en ce que** sur le maître primaire (1) au moins un sous-maître (16) est raccordé à la même ligne de bus (2).

3. Procédé selon l'une des revendications 1 ou 2, **caractérisé en ce que** les sous-esclaves (12, 15) reliés parallèlement à l'esclave primaire (3) disposent d'entrées de capteur et de sorties d'actionneur.

4. Procédé selon l'une des revendications 1 à 3, **caractérisé en ce que** les sous-esclaves (12, 15) reliés parallèlement à l'esclave primaire (3) réalisent entre eux une communication de données par la ligne de bus centrale (2, 2a, 2b) les reliant.

5. Procédé selon l'une des revendications 1, 3 ou 4, **caractérisé en ce qu**'un premier sous-maître (16) est relié parallèlement au maître primaire (1) et en ce que le sous-maître (16) communique avec un cloud (18) basé sur internet ou sur des appareils et entre dans le cloud (18) les données générées par le maître primaire (1).

6. Procédé selon l'une des revendications 1 à 5, **caractérisé en ce que** le sous-maître (16) met à disposition d'autres tâches, comme des tâches de diagnostic ou la fourniture d'une passerelle avec laquelle le sous-maître (16) entre les données du maître primaire (1) dans l'Internet, ou dans un LAN ou un WLAN ou dans un système de données mobile.
